(19) Europäisches Patentamt
European Patent Office
Office européen des brevets

(11) **EP 4 024 289 A1**

(12) **EUROPEAN PATENT APPLICATION**
published in accordance with Art. 153(4) EPC

(43) Date of publication:
**06.07.2022 Bulletin 2022/27**

(21) Application number: **21868061.9**

(22) Date of filing: **17.03.2021**

(51) International Patent Classification (IPC):
***G06N 3/063*** (2006.01)

(52) Cooperative Patent Classification (CPC):
**G06N 3/04; G06N 3/063**

(86) International application number:
**PCT/CN2021/081340**

(87) International publication number:
**WO 2022/057222 (24.03.2022 Gazette 2022/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.09.2020 CN 202010965425**

(71) Applicant: **REEXEN TECHNOLOGY CO., LTD.**
**Shenzhen, Guangdong 518049 (CN)**

(72) Inventors:
• YANG, Minhao
  Shenzhen, Guangdong 518049 (CN)
• LIU, Hongjie
  Shenzhen, Guangdong 518049 (CN)

(74) Representative: **Sun, Minghui**
**Marks & Clerk LLP**
**1 New York Street**
**Manchester M1 4HD (GB)**

(54) **IN-MEMORY SPIKING NEURAL NETWORK BASED ON CURRENT INTEGRATION**

(57) In this application, there is proposed a current integration-based in-memory spiking neural network (SNN) using charge-domain computation which is naturally compatible with working mechanisms of neurons. In the architecture according to one aspect, silicon-based SRAM cells are included in memory cells of a synaptic array, which can avoid non-idealities caused by resistive NVM materials. Additionally, a modified NVM cell is provided, which can also benefit from the in-memory SNN architecture design of this application. When SRAM cells are used as memory cells in the synaptic array, post-neuron circuits are designed accordingly so that the in-memory SNN architecture can be used in computation with multi-bit synaptic weights by combining a programmable number of columns. Further, for computation with multi-bit synaptic weights, a circuit is designed to be time-multiplexed for resource sharing, in order to achieve improved area and energy efficiency. At last, an auto-calibration circuit is also proposed, which can counteract conducting current variation caused by, among others, process, voltage, and temperature (PVT) variations and thus allows higher computing accuracy.

EP 4 024 289 A1

Fig. 4b

**Description**

This application claims the priority of Chinese Patent Application No. 202010965425.1, filed in the China National Intellectual Property Administration on September 15, 2020, entitled "Current Integration-Based In-Memory Spiking Neural Networks", which is hereby incorporated herein by reference in its entirety.

**TECHNICAL FIELD**

This application pertains to the field of neural networks and relates, more specifically, to current integration-based in-memory spiking neural networks.

**BACKGROUND**

Inspired by biological neural networks, neuromorphic computing, or more specifically spiking neural networks (SNNs) is considered as one promising future evolution of the current popular artificial neural networks. SNNs use spikes for communication (mostly unidirectional) between any connected pair of neurons, and these SNN neurons are active only when they are receiving or transmitting spikes. Such unique event-driven characteristics may potentially lead to significant energy saving if the sparsity of spiking activities is ensured. Industry and academia have been zealously investigating the circuits and architectures for SNNs. Some recent representative examples include IBM's TrueNorth that mimics axons, dendrites and synapses of biological neurons by using complementary metal-oxide-semiconductor (CMOS) circuit components and takes neurosynaptic cores (i.e, neurons' synaptic cores) as cores for key modules, also include Intel's Loihi, Tsinghua University's Tianjic, etc. In these prior works, the computing elements (i.e. neurons) need to explicitly read out synaptic weights from static random access memory (SRAM) for state-update computation, i.e. membrane potential calculation.

Compared to conventional Von Neumann architectures with centralized memory and processing units, the distributed memory helps mitigate the data communication bottleneck, but each processing element (PE) can be seen as a localized Von Neumann processor with local processing units (LPU), local memory, router for inter-PE or global data communication, etc. The energy spent on repetitively moving data (mainly synaptic weights) back and forth between LPU and local memory is still a waste in contrast to the weight-static dataflow in biological neural networks.

Thus, the in-memory computing concept has been drawing a lot of attention. Silicon-based conventional memory like SRAM, dynamic random access memory (DRAM) and Flash, and emerging nonvolatile memories (NVM) like spin-transfer torque magnetic random access memory (STT-MRAM), resistive random access memory (ReRAM), and phased-charge memory (PCM) can be equipped with processing capabilities for applications like deep neural network (DNN) acceleration. Researchers have also started to apply the in-memory computing concept to SNN, but almost exclusively on NVM. As pointed out in "arXiv-2019-Supervised learning in spiking neural networks with phase-change memory synapses" (identified hereinafter as "Literature 1"), even though NVM like PCM can store multi-bit information in one memory element/cell, which largely improves the area and potentially energy efficiency in contrast to single-bit storage in one SRAM cell, NVM materials are susceptible to many non-idealities, such as limited precision, stochasticity, non-linearity, conductance drift over time, etc. In contrast, the characteristics of silicon-based transistors are more stable.

At present, some have started the attempt to use SRAM cells in crossbar synaptic arrays. For example, Chinese Patent Publication No. CN111010162A mentions the possible use of SRAM cells as crossbar array cells, CN109165730A mentions the possible use of 6T SRAM cells, CN103189880B describes a synaptic device including memory cells that can be implemented as SRAM cells, but it does not give further details in respect of the in-SRAM SNN architecture and how signals are communicated between the synaptic array and neuron circuits in case of SRAM cells being used.

Therefore, there is an urgent need in the art for current integration-based in-memory SNNs, which dispense with the need to move data between processing units and memory cells such as silicon-based SRAM or NVM cells integrating memory and computing functionalities.

**SUMMARY**

In view of the above, it is just an object of the present application to provide such current integration-based in-memory SNNs. This object is attained by the following inventive aspects.

In a first aspect, there is provided a current integration-based in-memory SNN including pre-neurons, a synaptic array and post-neuron circuits,

the synaptic array configured to receive input spikes from the pre-neurons, the synaptic array consisting of i*j synaptic circuits, where i is the number of rows, j is number of columns, and i and j are both positive integers greater than or equal to 1,
each of the synaptic circuits including a memory cell, the memory cell made up of a conventional six-transistor static random-access memory (6T SRAM) cell for storing a 1-bit synaptic weight and two series transistors for reading the synaptic weight, one of the transistors including a gate connected to an output of an inverter in the 6T SRAM cell, a source connected to a high level and a drain connected to a source of the other transistor, the other transistor including a gate connected to a read word line, a drain connected to a read bit line for carrying a conducting current as an output current of the synaptic circuit, the post-neuron circuits including an integration capacitor and a comparator, each of the post-neuron circuits configured to fire a spike to a next-layer neuron depending on a comparison of an accumulated voltage across the integration capacitor with a threshold voltage; the accumulated voltage resulted from an integration by the integration capacitor of the output currents in one column of synaptic circuits to which the integration capacitor is connected.

According to embodiments disclosed herein, the memory cells integrate memory and computing functionalities, i.e., capable of in-memory computing. Non-idealities caused by resistive NVM materials are avoided by replacing NVM cells used in conventional synaptic arrays with conventional 6T SRAM cells storing 1-bit synaptic weights and adding to each memory cell two transistors connected in series for reading the synaptic weights. During the process of accumulating the conducting currents in the transistors by the integration capacitor in each post-neuron circuit and comparing the resulting voltage across the integration capacitor with the threshold voltage, it is not necessary to explicitly read out the synaptic weights from the conventional 6T SRAM cells, and it is determined whether to fire a spike to next-layer neurons based on the comparison. Such charge-domain computation used in this SNN architecture is naturally compatible with working mechanisms of neurons like integrate-and-fire (IF) neutron model, where spiking signals transmitted from presynaptic membranes discontinuously act, and are accumulated, on a postsynaptic membrane of a postsynaptic neuron, and upon an accumulated voltage on the postsynaptic membrane exceeding a threshold voltage, the postsynaptic neuron is excited to generate a spike, thus circumventing the problems in current-domain readout.

In one possible embodiment, each of the input spikes from the pre-neurons may be connected to a read word line for one row of synaptic circuits.

In one possible embodiment, after the post-neuron circuit fires the spike, the accumulated voltage across the integration capacitor may be reset to zero. If one terminal of the integration capacitor is grounded, then the accumulated voltage across the integration capacitor may be a voltage present on a top plate of the integration capacitor.

In one possible embodiment, even though each memory cell can only store a 1-bit synaptic weight, the SNN architecture according to the first aspect may be used in computation with multi-bit synaptic weights, in which a number of columns are combined according to a bitwidth of the synaptic weights so that each column of synaptic circuits corresponds to a respective bit position of the synaptic weights, and for these combined columns, the spikes from the respective parallel comparators are collected by respective ripple counters connected to the respective comparators, and resulting values in the ripple counters are bit shifted and added together depending on the bit position of the synaptic weights that each column corresponds to, followed by firing a spike to next-layer neurons depending on a comparison of a summed value resulting from the bit shifting and addition of the values in the ripple counters with a digital threshold. The number of combined columns may be programmable, and may be the same as the bitwidth of the synaptic weights.

Further, in one possible embodiment, in order to obtain improved area and energy efficiency in the case of SRAM cells being used, for the combined columns, the accumulated voltages across the integration capacitors may share an input of a common comparator in a time-multiplexed manner and may be each selected to be compared with a threshold voltage using a switch selection signal according to the bit position that it corresponds to.

In one possible embodiment, an output of the comparator may be connected to a register, and when the output of the comparator is high, an output of the register may be taken as an operand of an adder connected to the register.

In one possible embodiment, the adder may take the weight for the bit position as another operand, and when an output of the adder exceeds the digital threshold, a spike may be fired by the post-neuron circuit.

In one possible embodiment, for each column, the integrated voltage on the integration capacitor may be compared with a corresponding threshold voltage that is different from the threshold voltages for other columns.

In one possible embodiment, the SNN may further include an auto-calibration circuit configured to compensate for output current variation of the synaptic circuits caused by process, voltage, and temperature (PVT) variations through adjusting a pulse width according to

$$\Delta t = \frac{V_{ref} C_0}{I_0},$$

where $\Delta t$ represents the pulse width to be adjusted, $V_{ref}$ is the threshold voltage, $I_0$ is the output current and $C_0$ is a capacitance value.

In a second aspect, there is provided a current integration-based in-memory SNN, including pre-neurons, a synaptic array and post-neuron circuits,

the synaptic array configured to receive input spikes from the pre-neurons, the synaptic array consisting of i*j synaptic circuits, where i is the number of rows, j is number of columns, and i and j are both positive integers greater than or equal to 1, each of the synaptic circuits including a memory cell, the memory cell made up of one emerging nonvolatile memory (NVM) resistor and one field effect transistor (FET), the NVM resistor including a terminal connected to a drain of the FET and another terminal connected to a bit line for carrying a conducting current as an output current of the synaptic circuit, the FET including a source connected to a source line and a gate connected to a word line,
the post-neuron circuits including an integration capacitor and a comparator, each of the post-neuron circuits configured to fire a spike to a next-layer neuron depending on a comparison of an accumulated voltage across the integration capacitor with a threshold voltage; the accumulated voltage resulted from an integration by the integration capacitor of the output currents in one column of synaptic circuits to which the integration capacitor is connected.

In one possible embodiment of the second aspect, before being injected to the integration capacitor, the conducting currents in the bit line may pass through another FET including a source connected to the bit line, a drain coupled to a top plate of the integration capacitor and a gate connected to an output of an error amplifier. The error amplifier may have a positive input connected to a reference voltage and a negative input connected to the bit line. This makes sure the conducting currents in the memory cells are insensitive to the voltage on the integration capacitor by taking advantage of the large drain impedance of a transistor, which increases as the channel length increases.

In one possible embodiment of the second aspect, each of the input spikes from the pre-neurons may be connected to a read word line for one row of synaptic circuits.

In one possible embodiment of the second aspect, after the post-neuron circuit fires the spike, the accumulated voltage across the integration capacitor may be reset to zero, and in the event of one terminal of the integration capacitor being grounded, the accumulated voltage across the integration capacitor may be a voltage present on the top plate thereof.

In one possible embodiment of the second aspect, the SNN may further include an auto-calibration circuit configured to counteract output current variation of the synaptic circuits caused by PVT variations through adjusting a pulse width and to input the adjusted pulse width to the synaptic array instead.

As can be understood from the above description, in order to avoid the problems arising from the use of in-NVM SNNs due to various non-idealities of NVM materials such as limited precision, stochasticity, nonlinearity, conductance drift over time, etc., silicon-based SRAM in-memory SNN is employed to prevent the similar problems emerged when using NVM materials. The synaptic array in the in-memory SNN of the first aspect incorporates silicon-based SRAM cells as memory cells, and the post-neuron circuits are accordingly designed so that the in-memory SNN architecture can be also used in computation with multi-bit synaptic weights by combining a programmable number of columns. Additionally, as the silicon-based SRAM cells can only store 1-bit synaptic weights, for computation with multi-bit synaptic weights, the circuitry of the architecture is designed to be time-multiplexed for resource sharing, in order to achieve improved area and energy efficiency. At last, according to possible embodiments of the proposed SNN, an auto-calibration circuit is proposed, which can counteract output current variation caused by, among others, process, voltage, and temperature (PVT) variations and thus allows higher computing accuracy.

Further, although conventional NVM materials are susceptible to non-idealities, NVM cells can be suitably used in the SNN architecture according to the second aspect. That is, in-NVM SNNs can also benefit from the proposed interface and pulse width auto-calibration circuits that are connected to the post-neurons.

The techniques proposed herein can solve at least the problems and/or drawbacks discussed in the Background section and other disadvantages not mentioned above.

## BRIEF DESCRIPTION OF THE DRAWINGS

Fig. 1 is a schematic diagram illustrating information transmissions between pre-neurons, synapses and post-neurons in a biological spiking neural network (SNN);
Fig. 2 schematically illustrates a crossbar matrix circuit constructed on the basis of the biological SNN;
Fig. 3a is a schematic illustration of an input to synaptic array from pre-neurons according to an embodiment of the present invention;
Fig. 3b is a schematic illustration of a memory cell according to an embodiment of the present invention;
Fig. 3c is a schematic illustration of a post-neuron circuit according to an embodiment of the present invention;
Fig. 4a schematically illustrates the use in multi-bit computation according to an embodiment of the present invention;
Fig. 4b schematically illustrates time-multiplexing for use in computation in case of multi-bit weights according to an embodiment of the present invention;
Fig. 5a is a schematic illustration of an NVM cell according to another embodiment of the present invention;
Fig. 5b is a schematic illustration of an NVM cell and bit line interface circuit thereof according to another embodiment of the present invention;
Fig. 6a is a schematic illustration of a calibration circuit according to an embodiment of the present invention; and
Fig. 6b is a schematic illustration of a calibration circuit according to another embodiment of the present invention.

## DETAILED DESCRIPTION

The objects, principles, features and advantages of the present invention will become more apparent from the following detailed description of embodiments thereof, which is to be read in connection with the accompanying drawings. It will be appreciated that the particular embodiments disclosed herein are illustrative and not intended to limit the present invention, as also explained somewhere else herein.

The technical solution proposed herein may be applied, but not limited, to at least one of integrate-and-fire (IF) neuron models, leaky integrate-and-fire (LIF) models, spike response models (SRM) and Hodgkin-Huxley models.

For example, in commonly-used integrate-and-fire neuron models, a postsynaptic neuron receives all spikes from the axonal end of a presynaptic neuron to which the postsynaptic neuron is connected. Once a membrane potential of the postsynaptic neuron exceeds a threshold, the neuron will fire a spike, which is then transported via its axon to the axonal end. Following the firing, the postsynaptic neuron is hyperpolarized, initiating a refractory period in which it does not react even when stimulated. That is, the postsynaptic neuron is no longer receiving stimulation and maintained at a rest potential.

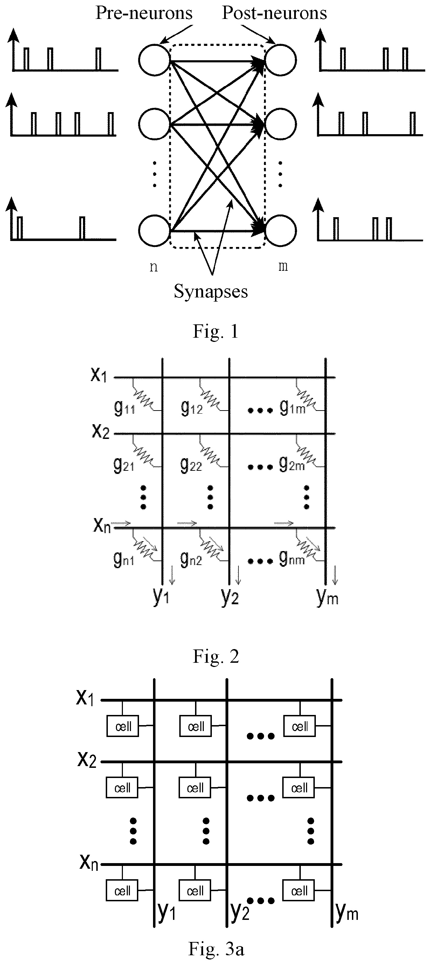

In order to explore the use of in-memory computing in SNNs, Literature 1 proposes an in-NVM SNN architecture, in which a crossbar matrix circuit as shown in Fig. 2 is constructed in accordance with the SNN model of Fig. 1, wherein each neuron of one layer receives all signals from all neurons in the previous layer. In principle, word lines carry an input vector, and each NVM cell's conductance value represents a matrix element. Additionally, currents on bit lines represent an inner product of the input vector and one column vector of the matrix. An output from the matrix is graphically shown in Fig. 2 and can be mathematically expressed as:

$$Y=GX \qquad (Eqn.\ 1) \qquad G=1/R,$$

where $X = [x_1, x_2,..., x_n]$ is the voltage input vector, $Y = [y_1, y_2,..., y_m]$ is the current output vector, and $G = [gij]$ (i=1, 2,..., n; j=1, 2,..., m) is the conductance matrix.

However, how the bit line currents are used to update the neurons' states, i.e., their membrane potentials, using neuroscience terminology, is often not adequately addressed. For example, in Literature 1, leaky integrate-and-fire neuronal dynamics of the neurons are implemented in software only. In "TETCI-2018-An all-memristor deep spiking neural computing system: a step toward realizing the low-power stochastic brain", in order to maintain the validity of Eqn. 1, resistance much smaller than the value of the NVM elements is used to sense the output currents, and consequently the output voltage is very small and needs to be amplified using power-consuming voltage amplifiers. It is worth mentioning that in "ISSCC-2020-A 74 TMACS/W CMOS-RRAM neurosynaptic core with dynamically reconfigurable dataflow and in-situ transposable weights for probabilistic graphical models", even though so-called integrate-and-fire neurons based on one-transistor-one-memristor (1T1R) memory cells are used for in-NVM computing, it relies on voltage sampling instead of current integration, and the architecture is used for probabilistic graphical models, not readily amenable for realizing SNNs.

Thus, the non-idealities of NVM as mentioned earlier often lead to subpar inference accuracy of artificial neural network (ANN) or SNN hardware compared to software models. Most works in literature only showcase the principle of using NVM for in-memory ANN or SNN in model simulations instead of constructing practical working chips based on the NVM.

As graphically illustrated in Literature 1, the instability of the conductance value of NVM over time for example in PCM can lead to significant degradation in inference accuracy even in relatively simple tasks. Silicon-based SRAM can circumvent those NVM material-related problems.

In this application, it is proposed a current integration-based SNN including pre-neurons, a synaptic array and post-neuron circuits. Fig. 3a shows the architecture of the synaptic array, in which, as can be seen, memory cells are included in lieu of the resistive NVM elements in the synaptic array of Fig. 2. The synaptic array is configured to receive spikes from the pre-neurons and is made up of i*j synaptic circuits, where i is the number of rows, j is the number of columns, and both i and j are positive integers greater than or equal to 1. As labeled in the figures, n and m represent the numbers of pre-neurons and post-neurons, respectively.

Each of the synaptic circuits includes a memory cell.

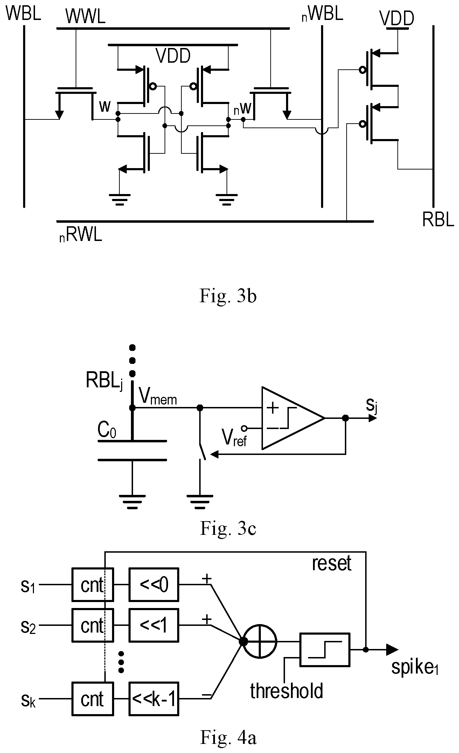

The memory cell is made up of a conventional 6T SRAM cell that stores a 1-bit synaptic weight and two transistors connected in series for reading the synaptic weight. One of the transistors has a gate connected to an output of an inverter in the conventional 6T SRAM cell, a source connected to a high level and a drain connected to a source of the other transistor. A gate of the other transistor is connected to a read word line, with a drain thereof being connected to a read bit line for carrying a conducting current as an output current of the synaptic circuit. It will be appreciated that the conventional 6T SRAM cell is made up of six field effect transistors (FETs), in which four FETs serves as two cross-coupled inverters storing one bit of information, and the other two FETs serve to control the access of read and write bit lines to the elementary storage cell. For example, Fig. 3b shows an embodiment of the memory cell employing p-channel FETs. It should be understood that n-channel FETs can also work. In another embodiment, the memory cell may be alternatively implemented as an 8T SRAM cell proposed by IBM based on the same concept of the conventional 6T SRAM cell in "JSSC-2008-An 8T-SRAM for variability tolerance and low-voltage operation in high-performance caches". In this embodiment, an n-channel FET is used to read out the synaptic weight stored in the conventional 6T SRAM cell.

The post-neuron circuits includes an integration capacitor and a comparator, each of the post-neuron circuits configured to fire a spike to a next-layer neuron depending on a comparison of an accumulated voltage across the integration capacitor with a threshold voltage; the accumulated voltage resulted from an integration by the integration capacitor of the output currents in one column of synaptic circuits to which the integration capacitor is connected.

Specifically, according to the present embodiment, during the write of a 1-bit synaptic weight, the write word line (WWL) is enabled high, and the write bit lines (WBL/$_n$WBL) are driven to complementary voltages of the content that needs to be written. For example, if "w=1" is to be written, WBL will be driven high and $_n$WBL will be driven low, respectively. It will be appreciated that " 1" represents a voltage level equal to a supply voltage VDD, and "0" represents a voltage level equal to a ground voltage VSS.

During a read operation, a read word line ($_n$RWL) is enabled low, and a synaptic weight stored in a conventional 6T SRAM cell is read from a read bit line (RBL).

During computation, the parallel spikes from the pre-neurons are sent to an input $x_i$ (i=1, 2,..., n) of the synaptic array, which is connected to $_n$RWL of each row. Thus, it would be appreciated that the read word lines $_n$RWL carry the input vector. In other words, the read word lines $_n$RWL serve as a spike input for the SNN.

RBL of each column is connected to an integration capacitor that is part of a post-neuron circuit. Fig. 3c shows an embodiment of the post-neuron circuit. It should be understood that the rows and columns may be otherwise defined depending on the direction in which the spikes are input, as well as on how the memory cells are configured. For example, in alternative embodiments, the spikes may be input column-wise, and each memory cell may be counterclockwise rotated 90 degrees. In such embodiments, the input $x_i$ may be connected to $_n$RWL of each column, with RBL of each row being connected to an integration capacitor. If each spike is assumed to have a pulse duration of Δt and the transistors in each memory cell have a conducting current of $I_0$, an incremental voltage on an integration capacitor $C_0$ due to the presence of one spike is:

$$\Delta V = \frac{I_0 \Delta t}{C_0} \qquad \text{(Eqn. 2)}$$

A total accumulated voltage change $V_{mem}$ on the integration capacitor in the presence of multiple spikes on the input lines $x_i$ is the multiplication of ΔV with the number of spikes. The total number of spikes input to each column, which is multiplied with the voltage change resulting from a single one spike, is that of spikes received by the post-neurons from all the neurons of the previous layer. Once the voltage change $V_{mem}$ on the integration capacitor exceeds a defined threshold voltage $V_{ref}$, a spike is generated at an output of the comparator $S_j$ (j=1, 2, ..., m) in Fig. 3c, and the voltage on the integration capacitor is reset to ground. It will be appreciated that this process corresponds to the behavior of a biological postsynaptic neuron that it fires a spike when the membrane potential exceeds a threshold potential and then declines back to a rest potential.

It will be appreciated that the output currents from the synaptic array are accumulated on the integration capacitors in the post-neuron circuits, and the voltage across each integration capacitor is compared to the threshold voltage. In this process, it is not necessary to explicitly read out the synaptic weights from the conventional 6T SRAMs, and it is determined whether to fire a spike to next-layer neurons based on the comparison. This SNN architecture uses charge-domain computation which is naturally compatible with working mechanisms of neurons, and thus circumvents the problems in current-domain readout.

In particular, although each SRAM cell can store only one bit of information, the in- SRAM SNN described in the above embodiments can be used in computation with multi-bit synaptic weights. Optionally, in such cases, pulses from several integrate-and-fire neuron circuits from parallel bit lines RBL$_j$ may be combined digitally to form a spike output of one single neuron. That is, several post-neuron circuits combine the columns of a number of parallel bit lines RBL$_j$, which is the same as a bitwidth of the synaptic weights. For example, for 3-bit synaptic weights, the number of combined columns is three, each corresponding to a respective position of the synaptic weights. The pulses from the parallel comparators are collected by parallel ripple counters connected to these comparators, and the values in the counters are bit shifted and added together. The summed value resulting from the bit shifting and addition is compared with a digital threshold, and the comparison is fired as a spike to next-layer neurons.

Fig. 4a shows a computing architecture for k-bit synaptic weights according to one embodiment, in which pulses from parallel k comparators to be combined are collected by parallel ripple counters (cnt). Notably, depending on the bit position of the synaptic weights that each column corresponds to, for example, in one embodiment, a weight for the k-th bit may be $2^{k-1}$, and the value in each ripple counter is bit shifted and added with the bit-shifted values in other ripple counters. Specifically, in this embodiment, column 1 is the least significant bit (LSB), and no bit shift occurs; and column k is the most significant bit (MSB), and the counter values are left shifted k-1 bits. The summed value resulting from adding up all the bit-shifted counter values for the k-bit synaptic weights is compared with a digital threshold, and once it goes above the threshold, one spike or multiple spikes are generated and all the ripple counters in this neuron combiner circuit are reset after firing of the spike(s). It will be appreciated that the number of combined columns k is programmable, and it is the same as the bitwidth of the synaptic weights.

It is particularly noted that as long as the threshold voltage $V_{ref}$ in Fig. 3c is sufficiently small so that $V_{mem}$ is regulated to a low voltage, the two pFETs in Fig. 3b, seen as one single compound transistor, can be kept in saturation when a spike is present on $_nRWL$ and W=1. The transistor operating in saturation region when conducting is important for maintaining a relatively consistent conducting current $I_0$ and minimizing the impact on it from a drain voltage of the transistor. A long channel length can be used to further increase an output impedance of the compound transistor.

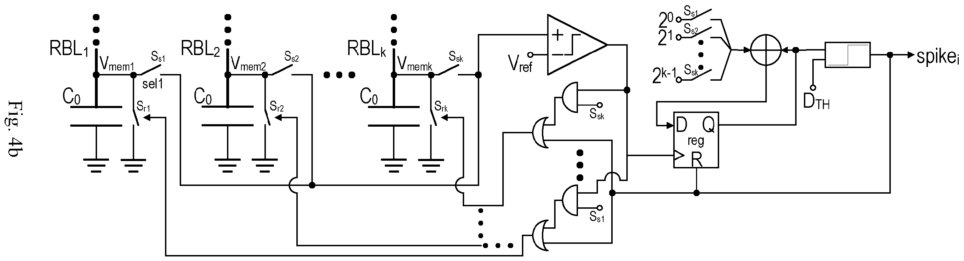

Further, in order to obtain improved area efficiency in the case of multi-bit synaptic weights, the comparator in Fig. 3c and the circuits in Fig. 4a may need to be modified and shared so that one comparator can be shared amongst post-neuron circuits for multiple columns of k-bit weights. Specifically, in one embodiment as illustrated in Fig. 4b, for the combined columns, accumulated voltages across the respective integration capacitors are connected to an input of the shared comparator in a time-multiplexed manner, with the threshold voltage being provided at another input of the comparator. In this embodiment, the time-multiplexing is controlled by a clock. Even though the notion of clock is seemingly incompatible with an asynchronous system, the integration capacitor voltage update and spike communication are not coordinated by clock, and the system can be approximately seen as asynchronous if the clock frequency is sufficiently high as compared to variation of the integrated voltage.

As an example, when the integration capacitor for the j-th position (j□[1, k]) is connected to the comparator, when compared with the threshold $V_{ref}$, if the accumulated voltage $V_{memj}$ (j=1,..., k) is larger, a high comparator output enables the accumulator to update its output through a D-type register, and a low comparator output does not update the accumulator's output. It will be appreciated that, in the case of multi-bit synaptic weights, two operands of an adder in the accumulator are an output of the register and a weight selected by switch selection signal $S_{sk}$ according to the current bit position, i.e., a selected bit weight. It is to be noted that although the bit weight is shown as $2^{k-1}$ in the embodiment of Fig. 4b, each column is not necessarily assigned with such a bit weight selected from a geometric series of 2 as the assignment of a geometric series of, e.g., 8 or 16 may be also possible in alternative embodiments. In particular, in some other embodiments, when the integrated voltage on each column's integration capacitor is compared with the corresponding threshold voltage, the threshold voltage for each column is not required to be the same. In other words, the post-neuron circuit may be individually associated with different threshold voltages. Speaking in another way, the voltages on the integration capacitors connected to the respective positions are separately compared with individual threshold voltages and weighted with the respective bit weights, and the weighted values are added up. If the summed value is greater than a digital threshold, then a spike is fire. Otherwise, no spike is fired following the bitwise summation.

Optionally, in some embodiments, the weight selection can be further gated by the output of the comparator to save the power of the adder, i.e. only high comparator output connects the weight to an input of the adder, and otherwise, 0 is connected instead.

When $S_{sk}$ is enabled, the accumulated voltage $V_{memk}$ corresponding to $S_{sk}$ is connected to the input of the comparator, and when the comparator output is high, $S_{rk}$ is enabled to reset the voltage of the corresponding integration capacitor to ground. When the comparator output is low, $S_{rk}$ is not enabled, and the voltage of the corresponding integration capacitor is not reset. In addition, following all the positions having been compared for their corresponding integration capacitor voltages, when the output of the accumulator exceeds the digital neuron threshold $D_{TH}$, a spike is generated, the register is reset, and all the integration capacitor potentials are reset to ground.

It will be appreciated that between the two types of resetting operations described above, the former occurs when the accumulated voltage for each bit becomes higher than the threshold voltage $V_{ref}$, while the latter is performed when the accumulated voltage for the multi-bit weight exceeds the digital neuron threshold $D_{TH}$. In other words, each integration capacitor is reset either when its accumulated voltage $V_{memj}$ becomes higher than the threshold voltage or when a spike is generated from the synaptic weight combining multiple columns. Thus, in one possible embodiment, as shown, an output from an AND operation of the comparator output and $S_{sk}$ is input to an OR gate which receives the generated spike as another input and outputs $S_{rk}$.

In a second aspect, there is provided a current integration-based in-memory SNN including pre-neurons, a synaptic array and post-neuron circuits. The synaptic array is configured to receive spikes from the pre-neurons and consists of i*j synaptic circuits, where i is the number of rows, j is the number of columns, and both i and j are positive integers greater than or equal to 1. Each of the synaptic circuit includes a memory cell.

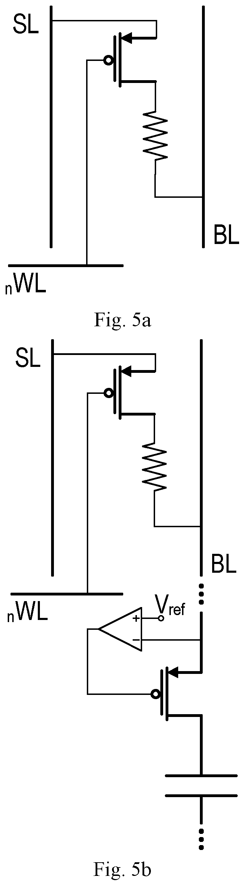

Although conventional in-NVM SNNs based on resistive NVM cells were found to be with non-idealities, in one embodiment, one-memristor-one-transistor (1R1T) NVM can also benefit from the above-described SNN architectures. The NVM cells in Fig. 3a may be constructed as in Fig. 5a. Specifically, each memory cell consists of one NVM resistor and one FET. One end of the NVM resistor is connected to a drain of the FET, and the other end is connected to a bit line BL for carrying a conducting current as an output current from the synaptic circuit. A source of the FET is connected to a source line SL, and a gate thereof is connected to a word line WL. Such a topology allows a voltage across the NVM cell, and thus a current flowing therethrough, to vary with a voltage on a top plate of an associated integration capacitor. Although such behavior of the integrated current can also be taken advantage of to establish an SNN, Eqn. 1 is no longer satisfied, and a particular SNN algorithm is required to account for this. In order to enable the use of a training algorithm that satisfies Eqn. 1, in one embodiment, it is needed to add an additional circuit as shown in Fig. 5b to the bit line. A source of a pFET is connected to the bit line, and a drain thereof is connected to the integration capacitor. A gate of the pFET is connected to an output of an error amplifier having a positive input coupled to a reference voltage and a negative input also connected to the bit line.

The post-neuron circuits include integration capacitors and comparators, and each of the post-neuron circuits is configured to fire a spike to next-layer neurons depending on a comparison of an accumulated voltage across the integration capacitor with a threshold voltage, the accumulated voltage resulting from an integration by the integration capacitor of the output currents from one column of synaptic circuits, to which the specific post-neuron circuit is connected.

This in-memory SNN works in a similar way to that of the first aspect. Specifically, the synaptic array receives the spikes via word lines each connecting one of the pre-neuron circuits to a respective row of synaptic circuits. That is, voltage pulses are applied via the word lines. For each post-neuron circuit, the accumulated voltage across the integration capacitor is reset to zero after it fires a spike. If one terminal of the integration capacitor is grounded, the accumulated voltage across the integration capacitor will be a voltage present on a top plate of the integration capacitor.

We propose a spike pulse-width auto-calibration circuit that can counteract conducting current variation caused by process, voltage, and temperature (PVT) variations that are not addressed adequately in the prior art.

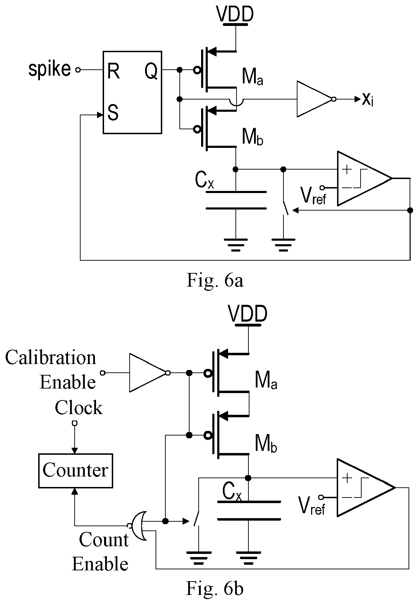

Specifically, the variation of $I_0$ caused by any global process, voltage and temperature (PVT) variations may be compensated by adjusting a pulse width $\Delta t$ of a spike motif, and the adjustment procedure can be automatic. Optionally, in one embodiment, as shown in Fig. 6a, a leading edge (presumed to be positive without loss of generality) of an uncalibrated spike sets gates of replica transistors $M_a$ and $M_b$ of two readout pFETs in Fig. 3b to low, and the conducting current starts to charge a capacitor $C_x$. Once a potential on $C_x$ exceeds the threshold voltage $V_{ref}$, the comparator's output becomes high and sets the gates of $M_a$ and $M_b$ high again. In this way, the pulse width of $x_i$ is automatically adjusted according to the conducting current of the compound transistor $M_a$ and $M_b$, and is used as the pulse width $\Delta t$ for

the spike motif sending to the SNN array like the input in Fig. 3a. The condition of using an SR latch like in Fig. 6a is that the pulse width of the input spike is smaller than the output spike. The calibration principle can be expressed by the equation below:

$$\Delta t = \frac{V_{ref} C_0}{I_0} \qquad (Eqn. 3)$$

where, $\Delta t$ is the pulse width to be adjusted, $V_{ref}$ is the threshold voltage, $I_0$ is the output current, and $C_0$ is the capacitor's capacitance.

Optionally, if a clock with a reasonable resolution is available, the calibration circuit like in Fig. 6b can be used to store the calibrated pulse width of a spike digitally. The working mechanism is still governed by Eqn. 3. The counter starts to count the clock cycles when the calibration is enabled, and stops when the integrated voltage on $C_x$ crosses $V_{ref}$. In this embodiment, a switch for resetting the integrated voltage on $C_x$ is implemented as an nFET. The counter may stop when the comparator output is high and sets an NOR gate's output low. The stored value in the counter can then be applied to all the incoming spikes to an array like in Fig. 3a without frequently enabling this calibration circuit.

It should be noted that the embodiment of Figs. 6a and 6b may be similarly based on an in-NVM SNN architecture. Optionally, $M_a$ and $M_b$ may be replaced with the 1R1T structure according to the embodiment of Fig. 5b. Specifically, the source of the pFET in the NVM cell is connected to VDD, and R is connected to $C_x$ via a drain of a pFET on a bit line.

Thus, it would be also appreciated that the SNN architectures and calibration principles proposed herein are suitable for 8T SRAM, and NVM cells can also benefit from the SNN architectures. It would be further appreciated that the memory cells are selected as 8T SRAM or NVM, and all SNNs based on the memory cells can have the beneficial effect. It should be understood that memory cells that can be used in the current integration-based SNNs proposed herein are not limited to 8T SRAM or NVM cells. Theoretically, any other memory cells allowing currents to be summed without being affected by the integrated voltages on the capacitors in the post-neurons can also be used.

It should be noted that the individual embodiments described herein and/or technical features involved therein can be arbitrarily combined as long as there is no conflict between each other and all the embodiments resulting from such combinations are also considered to fall within the scope of this application.

Those skilled in the art could clearly understand that, for the convenience and conciseness of description, for details in specific working processes of the foregoing apparatuses and devices, reference may be made to the above detailed description of corresponding processes in the method embodiments, and a repeated description of such details is omitted to avoid redundancy.

The foregoing description presents merely a few specific embodiments of the present invention, and the scope of the present application is in no way limited thereto. Any and all variations or substitutions that can be easily devised without departing from the scope of the disclosure herein by those of ordinary skill in the art are intended to fall within the scope of this application. Thus, the scope of the application is defined by the appended claims.

## Claims

1. A current integration-based in-memory spiking neural network (SNN) comprising pre-neurons, a synaptic array and post-neuron circuits, wherein

   the synaptic array is configured to receive input spikes from the pre-neuron; the synaptic array consisting of i*j synaptic circuits; i being a number of rows, j being a number of columns, and i and j both being positive integers greater than or equal to 1;
   each of the synaptic circuits comprising a memory cell;
   the memory cell made up of a conventional six-transistor static random-access memory (6T SRAM) cell for storing a 1-bit synaptic weight and two transistors connected in series for reading the synaptic weight, one of the transistors having a gate connected to an output of an inverter in the 6T SRAM cell, a source connected to a high level and a drain connected to a source of the other one of the transistors; the other one of the transistors having a gate connected to a read word line, a drain connected to a read bit line for carrying a conducting current as an output current of the synaptic circuit;
   the post-neuron circuits comprising an integration capacitor and a comparator, each of the post-neuron circuits configured to fire a spike to a next-layer neuron depending on a comparison of an accumulated voltage across the integration capacitor with a threshold voltage; the accumulated voltage resulted from an integration by the integration capacitor of the output currents in one column of synaptic circuits to which the integration capacitor is connected.

2. The SNN of claim 1, wherein each of the input spikes from the pre-neurons is connected to a read word line for one row of synaptic circuits.

3. The SNN of claim 2, wherein after the post-neuron circuit fires the spike, the accumulated voltage across the integration capacitor is reset to zero.

4. The SNN of any one of claims 1 to 3, wherein for computation with multi-bit synaptic weights, a number of columns are combined according to a bitwidth of the synaptic weights so that each column of synaptic circuits corresponds to a respective bit position of the synaptic weights, and for these combined columns, the spikes from the respective parallel comparators are collected by respective ripple counters connected to the respective comparators, and resulting values in the ripple counters are bit shifted and added together depending on the bit position of the synaptic weights that each column corresponds to, a spike is fired to next-layer neurons depending on a comparison of a summed value resulting from the bit shifting and addition of the values in the ripple counters with a digital threshold.

5. The SNN of claim 4, wherein for the combined columns, the accumulated voltages across the integration capacitors share an input of a common comparator in a time-multiplexed manner and are each selected to be compared with a threshold voltage using a switch selection signal according to the bit position that the selected accumulated voltage corresponds to.

6. The SNN of claim 5, wherein an output of the comparator is connected to a register, and when the output of the comparator is high, an output of the register is taken as an operand of an adder connected to the register.

7. The SNN of claim 6, wherein the adder takes a weight for the bit position as another operand, and when an output of the adder exceeds the digital threshold, a spike is fired by the post-neuron circuit.

8. The SNN of claim 7, wherein for each column, the integrated voltage on the integration capacitor is compared with the corresponding threshold voltage that is different from threshold voltages for other columns.

9. The SNN of claim 1, further comprising an auto-calibration circuit configured to counteract output current variation of the synaptic circuits caused by process, voltage, and temperature (PVT) variations through adjusting a pulse width and to input the adjusted pulse width to the synaptic array; a principle of the calibration being

$$\Delta t = \frac{V_{ref} C_0}{I_0},$$

where $\Delta t$ represents the pulse width to be adjusted, $V_{ref}$ is the threshold voltage, $I_0$ is the output current and $C_0$ is a capacitance value.

10. A current integration-based in-memory spiking neural network (SNN) comprising pre-neurons, a synaptic array and post-neuron circuits, wherein

the synaptic array is configured to receive input spikes from the pre-neurons, the synaptic array consists of i*j synaptic circuits, where i is a number of rows, j is a number of columns, and i and j are both positive integers greater than or equal to 1,
each of the synaptic circuits comprises a memory cell,
the memory cell is made up of one emerging nonvolatile memory (NVM) resistor and one field effect transistor (FET), the NVM resistor has a terminal connected to a drain of the FET and another terminal connected to a bit line for carrying a conducting current as an output current of the synaptic circuit, the FET comprises a source connected to a source line and a gate connected to a word line,
the post-neuron circuits comprising an integration capacitor and a comparator, each of the post-neuron circuits configured to fire a spike to a next-layer neuron depending on a comparison of an accumulated voltage across the integration capacitor with a threshold voltage; the accumulated voltage resulted from an integration by the integration capacitor of the output currents in one column of synaptic circuits to which the integration capacitor is connected.

11. The SNN of claim 10, wherein before being injected to and integrated by the integration capacitor, the conducting currents in the bit line passes through another FET having a source connected to the bit line, a drain coupled to a top plate of the integration capacitor and a gate connected to an output of an error amplifier, and the error amplifier has a positive input connected to a reference voltage and a negative input connected to the bit line.

12. The SNN of any of claims 10 or 11, wherein after the post-neuron circuit fires the spike, the accumulated voltage across the integration capacitor is reset to zero, and the accumulated voltage across the integration capacitor is a voltage on the top plate thereof if one terminal of the integration capacitor is grounded.

13. The SNN of claim 12, further comprising an autocalibration circuit configured to counteract output current variation of the synaptic circuits caused by process, voltage, and temperature (PVT) variations through adjusting a pulse width and to input the adjusted pulse width to the synaptic array.

Fig. 1

Fig. 2

Fig. 3a

Fig. 3b

Fig. 3c

Fig. 4a

Fig. 4b

Fig. 5a

Fig. 5b

Fig. 6a

Fig. 6b

## INTERNATIONAL SEARCH REPORT

| | International application No. |
|---|---|
| | **PCT/CN2021/081340** |

| A. | CLASSIFICATION OF SUBJECT MATTER |
|---|---|
| | G06N 3/063(2006.01)i |

According to International Patent Classification (IPC) or to both national classification and IPC

| B. | FIELDS SEARCHED |
|---|---|

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

WPI, EPODOC, CNPAT, CNKI: 脉冲神经网络, 存内计算, 存算一体, 突触, SRAM, 电流, 积分, 电容, spiking neural network, computing in memory, synapse, current, integra+, capacitor

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 110543933 A (PEKING UNIVERSITY) 06 December 2019 (2019-12-06) description, paragraphs [0032]-[0050], and figures 1-3 | 1-3, 10-12 |
| Y | US 2019370640 A1 (BRITISH CAYMAN ISLANDS INTELLIGO TECHNOLOGY INC.) 05 December 2019 (2019-12-05) description, paragraphs [0025]-[0029], figures 1A-1C | 1-3 |
| Y | CN 109165730 A (UNIVERSITY OF ELECTRONIC SCIENCE AND TECHNOLOGY OF CHINA) 08 January 2019 (2019-01-08) description, paragraphs [0017]-[0026], and figure 5 | 10-12 |
| A | CN 110852429 A (HUAZHONG UNIVERSITY OF SCIENCE AND TECHNOLOGY) 28 February 2020 (2020-02-28) entire document | 1-13 |
| A | US 2018260696 A1 (ARM LTD) 13 September 2018 (2018-09-13) entire document | 1-13 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 May 2021** | **27 May 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/081340**

| Patent document cited in search report | | | Publication date (day/month/year) | Patent family member(s) | | | Publication date (day/month/year) |
|---|---|---|---|---|---|---|---|
| CN | 110543933 | A | 06 December 2019 | WO | 2021027214 | A1 | 18 February 2021 |
| US | 2019370640 | A1 | 05 December 2019 | TW | 202013264 | A | 01 April 2020 |
| CN | 109165730 | A | 08 January 2019 | None | | | |
| CN | 110852429 | A | 28 February 2020 | None | | | |
| US | 2018260696 | A1 | 13 September 2018 | KR | 20190120253 | A | 23 October 2019 |
| | | | | WO | 2018162874 | A1 | 13 September 2018 |
| | | | | CN | 110383301 | A | 25 October 2019 |

Form PCT/ISA/210 (patent family annex) (January 2015)

**EP 4 024 289 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010965425
- CN 111010162 A
- CN 109165730 A
- CN 103189880 B